# EUROPEAN PATENT SPECIFICATION

(11) **EP 2 702 092 B1**
(45) Date of publication and mention of the grant of the patent: **11.10.2017**
(21) Application number: 11716261.0
(22) Date of filing: 26.04.2011
(51) Int. Cl.: D06M 15/227, C08K 3/10, B32B 5/02, B32B 27/12, B32B 5/12, B32B 27/32, B29C 70/20, C08J 5/04, B29K 305/00

(54) **STEEL FIBER REINFORCED COMPOSITES**
MIT STAHLFASERN VERSTÄRKTE VERBUNDWERKSTOFFE
MATERIAUX COMPOSITES RENFORCES PAR DES FIBRES D' ACIER

(43) Date of publication of application: 05.03.2014
(73) Proprietor: NV Bekaert SA, 8550 Zwevegem (BE)
(72) Inventor: VANDEWALLE, Sophie, B-8800 Rumbeke (BE)
(74) Representative: Messely, Marc
(86) International application number: PCT/EP2011/056574
(87) International publication number: WO 2012/146272

(56) References cited:
- WO-A1-03/010353
- DATABASE WPI Week 197816 Thomson Scientific, London, GB; AN 1978-29567A XP002668767, & JP 53 025229 A (HONDA MOTOR IND CO LTD) 8 March 1978 (1978-03-08)

## Description

### Technical Field

The invention relates to the field of fiber reinforced composite materials, and specifically to the field of fiber reinforced plastics.

### Background Art

Fiber reinforced composites are known for a long time. Thermoplastic or thermoset resins are used as matrix material and different types of reinforcement fibers are known. Important reinforcement fibers are carbon fibers, glass fibers and aramid fibers, although other fibers such as flax fibers and other natural fibers are also being used.

Strength can be one of the design criteria for fiber reinforced plastics (fiber reinforced composites). However, for practical use of the fiber reinforced plastic, other parameters can be even more important. For numerous applications, not strength is of prime importance, but stiffness (including bending stiffness and torsional rigidity) and energy absorption at impact (or impact resistance) of the fiber reinforced plastics product. Of the three fiber types that are used the most in composite reinforcement (fiberglass, aramid and carbon fibers), carbon fibers have the highest modulus of elasticity and hence result in fiber reinforced composites of higher stiffness than aramid or glass fiber reinforced composites. Aramid and glass fiber reinforced composites have lower stiffness. Impact resistance of composites reinforced with carbon or glass fibers is in general not considered as very good. Drawbacks of aramid fiber reinforced composites are the low compression strength, high level of creep and high level of moisture absorption.

EP1342623A is describing an impact beam which is comprising a polymer matrix and a metal reinforcing structure that comprises metal cords. The impact beam has improved impact resistance and improved integrity during and after the impact. However, it is a disadvantage of the disclosure in EP1342623A that no fiber reinforced parts of complex shapes can be made with the metal cords described in the document. Another drawback is that the size (thickness) of the cords does not allow distribution of the reinforcement evenly over a full surface of a fiber reinforced composite without having a high mass percentage of metal cords.

Self reinforced polyolefin composites are described in a number of patent publications, e.g. in EP 1650021A1, EP1787790A1, WO2004/028803 and in US2009/0017322A1. Self reinforced polyolefin composites have the benefit that they are easily recyclable. An advantage in recycling is that the self reinforced polyolefin composites do not comprise glass fibers, given the health issues that can exist when recycling waste material that contains glass fibers. It is a problem that the stiffness of the self reinforced polyolefin composites is not sufficient for applications where high stiffness of the composite is required.

### Disclosure of Invention

It is an object of the invention to provide an improved fiber reinforced composite. It is a specific object of the invention to provide a fiber reinforced composite that is having good stiffness (rigidity) combined with good impact properties. It is another benefit of the invention that a fiber reinforced composite can be made with complex shapes.

A first aspect of the invention is a fiber reinforced composite. The fiber reinforced composite is comprising a matrix material and stainless steel fibers. The stainless steel fibers have a polygonal cross section and the stainless steel fibers have an annealed microstructure. In a specific embodiment, the polygonal cross section is hexagonal. Preferably, the stainless steel fibers are devoid of crimp.

The fiber reinforced composite according to the invention has good stiffness (given the stiffness of the stainless steel fiber fibers of about 200 GPa) and energy absorption at impact, while having sufficient strength. The use of stainless steel fibers with a polygonal cross section creates a good adhesion between the stainless steel fibers and the matrix material in the fiber reinforced composite.

The fiber reinforced composite according to the invention has a number of other additional benefits over composites reinforced with carbon, glass or aramid fibers. The fiber reinforced composite according to the invention is having shielding properties against electromagnetic waves and thermal as well as electrical conductivity. The shielding properties against electromagnetic waves and the electrical conductivity are even enhanced by the annealed microstructure of the stainless steel fibers. It has also been shown that the fiber reinforced composite according to the invention has much better vibration damping properties compared to steel structures, and also much better damping properties compared to similar carbon, glass or aramid reinforced composites.

The fiber reinforced composites according to the invention have shown to have higher compression strength, lower creep levels and lower moisture absorption than similar aramid fiber reinforced composites.

According to an embodiment of the invention, bundle drawing is used to make the stainless steel fibers. In case bundle drawing is used to make stainless steel fibers for use according to the invention, stainless steel fibers are obtained that are having an irregular and rough polygonal cross sectional shape. It has been found that stainless steel fibers with an irregular and rough cross sectional shape have improved adhesion to the matrix material of the fiber reinforced composite. Bundle drawing is described e.g. in US-A-2050298, US-A-3277564 and in US-A-3394213. Metal wires are forming the starting material and are covered with a coating such as iron or copper. A bundle of these covered wires is subsequently enveloped in a metal pipe. Thereafter the thus enveloped pipe is reduced in diameter via subsequent wire drawing steps to come to a composite bundle with a smaller diameter. The subsequent wire drawing steps may or may not be alternated with an appropriate heat treatment to allow further drawing. Inside the composite bundle the initial wires have been transformed into thin fibers which are embedded separately in the matrix of the covering material. Such a bundle preferably comprises no more than 2000 fibers, e.g. between 50 and 1500 fibers. Once the desired final diameter has been obtained the covering material can be removed e.g. by dissolving the covering material in an adequate pickling agent or solvent. The final result is the naked fiber bundle. In case a stainless steel fiber roving is used in the invention, a stainless steel fiber roving is obtained by taking one or more of these naked fiber bundles together.

The stainless steel fibers in this invention are made out of stainless steel. Stainless steel is defined as a steel alloy with a minimum of 10.5% chromium content by mass. Examples of stainless steel grades that can be used in the invention include (but are not limited to) AISI 316, AISI 316L, AISI 302, AISI 302HQ, AISI 304 and AISI 304F.

Preferably the stainless steel fibers used in the invention have an average elongation at break in tensile mode of at least 6%, preferably of 10%. The elongation at break is tested on individual fibers, with a test length of 100 mm and a speed of 2 mm/minute and a preload of 0.005 N. More preferably, in the invention stainless steel fibers are used that have an average elongation at break in tensile mode of at least 13%. Even more preferably, stainless steel fibers are used that have an average elongation at break in tensile mode of at least 15%. It has been found that the use of stainless steel fibers with higher elongation at break in tensile mode resulted in fiber reinforced composites with higher absorption of impact energy, without having a negative effect on the stiffness, and while still having a sufficient level of tensile strength.

The stainless steel fibers can be present in the fiber reinforced composite in a number of different ways. In one embodiment, the stainless steel fibers are present as stainless steel fibers of infinite length; i.e. of the filament type (meaning of continuous length).

In another embodiment, the stainless steel fibers are present in the fiber reinforced composite as stainless steel fiber rovings. With roving is meant, as is known in fiber reinforced composites industry, a continuous strand of substantially parallel filaments of substantially infinite length.

In another embodiment the stainless steel fibers are present in the fiber reinforced composites as stainless steel fibers of discrete length; this means that the stainless steel fibers are having a fiber length distribution and an average fiber length. When stainless steel fibers of discrete length are used, the average fiber length is preferably higher than 60 mm, more preferably more than 90 mm, even more preferably more than 150 mm, and still even more preferred more than 175 mm. An example of production process to make stainless steel fibers of discrete length is stretch breaking, technique which is known as such in textile industry.

The stainless steel fibers can be present in one or more directions in the fiber reinforced composite. Preferably the stainless steel fibers in a specific direction are aligned in that direction, meaning that preferably the stainless steel fibers are neither twisted nor textured nor having crimp, but are straight and aligned.

According to an embodiment of the invention, the matrix of the fiber reinforced composite can be a thermoplastic polymer or thermoplastic resin. Examples of thermoplastic polymers or thermoplastic resins used according to the invention are polyamide (e.g. polyamide 6 and polyamide 6.6), thermoplastic polyester (e.g. PET: polyesterteraphtalate), polyolefins, polypropylene, polyethylene, high density polyethylene modified by means of maleic anhydrid, PBS (polybutylene succinate) and polycarbonate.

According to another embodiment of the invention, the matrix of the fiber reinforced composite can be a thermoset resin. Examples of thermoset resins that can be used according to the invention are unsaturated polyester, epoxy, vinylester and polyisocyanurate resins.

In a specific embodiment of the invention the stainless steel fibers are having an equivalent diameter between 10 and 100 micrometer. The term "equivalent diameter" of a particular fiber is to be understood as the diameter of an imaginary fiber having a circular radial cross section, which cross section having a surface area identical to the average of the surface areas of cross sections of the particular fiber. In a preferred embodiment of the invention, the stainless steel fibers have an equivalent diameter between 30 and 80 micrometer. In a further preferred embodiment, the stainless steel fibers have an equivalent diameter between 35 and 70 micrometer. The selection of thicker fibers (fibers having a higher equivalent diameter) has shown to have a number of additional benefits. Use of thicker fibers (fibers having a higher equivalent diameter) has shown to result in composites that have higher energy absorption at impact and higher elongation at break in tensile mode. The total cost of the fiber reinforced composite according to the invention made with thicker fibers is lower, thanks to the easier and hence cheaper process of fiber manufacturing.

The result that fiber reinforced composites made with stainless steel fibers with a higher equivalent diameter have a higher energy absorption at impact is surprising. It is known and general practice in composites reinforced with e.g. carbon, glass or aramid fibers to use fine fibers for best impact strength. A typical carbon fiber diameter used for carbon reinforced composites is 7 µm. For glass fiber reinforced composites typical glass fiber diameters are 8 - 20 µm. For aramid fiber reinforced composites, typical aramid fiber diameter is 12 µm.

Stainless steel fibers that have a lower equivalent diameter allow more easily to make fiber reinforced composites of more complex shapes. Fibers having a higher equivalent diameter have the benefit that they are easier (and hence cheaper) to produce and lead to a cheaper fiber reinforced composite made with fibers of higher equivalent diameter.

It has been found that stainless steel fibers with an equivalent diameter between 35 and 70 micrometer provide the best combination of properties to the fiber reinforced composite: stiffness, impact energy absorption, sufficient strength and ease to make fiber reinforced composites of complex shapes.

In a further preferred embodiment, the stainless steel fibers have an equivalent diameter between 45 and 70 micrometer. Stainless steel fibers of an equivalent diameter of this range are easier to manufacture.

In a further embodiment of the first aspect of the invention, the stainless steel fibers that are used to make the fiber reinforced composite are comprising a sizing. The sizing can be a water-based polymeric material or the sizing can be solvent based. Use of a water based sizing has the benefit that the application of the sizing is more friendly to the environment. Use of the sizing on the stainless steel fibers has shown benefits in processing the stainless steel fibers into a shape for use in manufacturing the fiber reinforced composite and in making the fiber reinforced composite, as the stainless steel fibers are kept together. The sizing can be selected to increase adhesion between the stainless steel fibers of the stainless steel fiber roving and the matrix of the fiber reinforced composite. An example of such a sizing is PVA (polyvinylalcohol).

In another embodiment of the first aspect of the invention, the stainless steel fibers are devoid of a sizing. Stainless steel fibers that are devoid of a sizing have a number of benefits. It gives a larger design freedom to the manufacture of the fiber reinforced composite as fiber reinforced composites of more complex shapes can be made, as the stainless steel fibers can more easily take the shape of the fiber reinforced composite object that is to be made. The energy absorption at impact is also good. Surprisingly, use of stainless steel fibers that are devoid of a sizing has a good adhesion of the stainless steel fibers to the matrix. At the contrary, it is general practice in fiber reinforced composites to use a sizing on the fibers. E.g. carbon, glass or aramid fibers or fiber rovings comprise a sizing to satisfy the requirements of adhesion of the carbon, glass or aramid fibers to the matrix of the fiber reinforced composite made with these fibers or fiber rovings.

In yet another embodiment of the first aspect of the invention, the stainless steel fibers are arranged in bundles. Such a bundle can be a stainless steel fiber roving, or a bundle of stainless steel fibers of discrete length, e.g. a stretch broken sliver of stainless steel fibers. In a preferred embodiment, the bundles of stainless steel fibers are comprising a fiber or yarn wrapped around the stainless steel fiber bundles. When a fiber or yarn is wrapped around the stainless steel fiber bundle, the cohesion of the stainless steel fiber bundle is improved. The processing of the stainless steel fiber bundles is improved this way. A number of specific benefits have been observed when using a stainless steel fiber bundle with a fiber or yarn wrapped around the stainless steel fiber bundle. The production of a textile structure with the stainless steel fiber bundle for use in fiber reinforced composite is facilitated. The production of the fiber reinforced composite is facilitated as well, in that fiber reinforced composites of more complex shapes can be made without the stainless steel fiber bundle open up under the influences of the forces on the stainless steel fiber bundles when shaping the fiber reinforced composite. The impact properties of the fiber reinforced composite made with stainless steel fiber bundles with a fiber or yarn wrapped around the stainless steel fiber bundle has shown to be good, as well as the adhesion properties of the stainless steel fibers to the matrix in the fiber reinforced composite.

In a specific embodiment, the stainless steel fiber bundle comprises a polyvinylalcohol (PVA) fiber or polyvinylalcohol (PVA) yarn wrapped around the stainless steel fiber bundle.

In another specific embodiment, the stainless steel fiber bundle comprises a thermoplastic fiber or thermoplastic yarn wrapped around the stainless steel fiber bundle. In yet another specific embodiment, the stainless steel fiber bundle comprises a bicomponent fiber or a yarn made from bicomponent fibers wrapped around the stainless steel fiber bundle, preferably the bicomponent fibers have a core-sheath structure with the sheath having a lower melting point than the core. The benefit of these embodiments is an improved adhesion of the stainless steel fibers to the matrix when using a thermoplastic polymer matrix with a melting point higher than the melting or softening point of the thermoplastic fiber or thermoplastic yarn of the sheath of the bicomponent fibers.

In another specific embodiment, the stainless steel fiber bundle comprises a polyester fiber or polyester yarn wrapped around the stainless steel fiber bundle.

In yet another embodiment of the first aspect of the invention, the fiber reinforced composite comprises stainless steel fibers which are provided in a two-dimensional textile structure. With two-dimensional textile structure is meant a structure that has a width and length much greater than its thickness. The stainless steel fibers in the two-dimensional textile structure can be present in different ways, e.g. as stainless steel fibers of infinite length, as stainless steel fiber rovings, as stainless steel fiber bundles with stainless steel fibers of discrete length...

Examples of two-dimensional textile structures that can be used according to this embodiment of the invention are:
- A woven fabric, comprising stainless steel fibers, e.g. in the form of stainless steel fiber bundles or stainless steel fiber rovings in warp and weft direction
- A woven fabric, comprising stainless steel fibers, e.g. in the form of stainless steel fiber bundles or stainless steel fiber rovings in only one direction (warp or weft) of the fabric
- A weft insertion warp knitted fabric, comprising stainless steel fibers, e.g. in the form of stainless steel fiber bundles or stainless steel fiber rovings, in warp or in weft, or in warp and in weft, and connected by means of one or more stitching or knitting yarns. As an example, the stitching yarns can be thermoplastic, or the stitching yarn can be made from bicomponent fibers, preferably the bicomponent fibers have a core-sheath structure with the sheath having a lower melting point than the core. An example is the use of a PVA (polyvinylalcohol) stitching or knitting yarn.
- A multiaxial fabric, in which stainless steel fibers e.g. in the form of stainless steel fibers, stainless steel fiber bundles or stainless steel fiber rovings are lying in different directions, and are connected by means of stitching or knitting yarns. The stitching yarns can e.g. be thermoplastic, or the stitching yarn can be made from bicomponent fibers, preferably the bicomponent fibers have a core-sheath structure with the sheath having a lower melting point than the core. An example of a stitching or knitting yarn that can be used is a PVA (polyvinylalcohol) yarn.
- A fabric, in which stainless steel fibers, e.g. in the form of stainless steel fibers, stainless steel fiber bundles or stainless steel fiber rovings are lying in one or more direction, and in which the fabric (and hence the stainless steel fiber rovinigs in it) is given cohesion by means of one or more pieces of foil or one or more scrims, that are glued or welded to the stainless steel fiber rovings in the fabric, or to each other.
- A fabric in which stainless steel fibers are laid in layers in different directions and consolidated into a fabric in a way as known in the art. A technology that can be used and wherein stretch broken fibers are used is given in WO2011/018574.

Providing stainless steel fibers in a textile structure for making the fiber reinforced composites facilitates the production of the fiber reinforced composite.

The use of a textile structure in which the stainless steel fibers are present with substantially no crimp has shown to give better values for the energy absorption in impact loading and for the stiffness of the composite. It has been shown that the improvement of stiffness of a composite with a no crimp textile structure compared to a textile structure with crimp is much higher for a fiber reinforced composite comprising stainless steel fibers according to the invention compared to carbon, glass or aramid fiber reinforced composites. With crimp of stainless steel fibers in a textile structure is meant the waviness of the stainless steel fibers in the textile structure. With "substantially no crimp" is meant that the stainless steel fibers are substantially straight in the textile structure, without showing crimp.

In a specific embodiment of the invention, the textile structure comprises thermoplastic material, e.g. thermoplastic fibers or yarns, or a thermoplastic foil or strips of a foil, or scrim or components of a scrim. The textile structure can also comprise bicomponent fibers or yarns made out of bicomponent fibers. The bicomponent fibers are preferably of the core-sheath type, having a sheath of lower melting temperature than the core. Applying heat to such a textile structure creates partly or complete melting of the thermoplastic material in the textile structure. After solidifying, an improved stability is provided to the textile structure which facilitates cutting of the textile structure without losing its integrity and facilitates positioning in the mould of the textile structure that is comprising stainless steel for producing the fiber reinforced composite according to the invention.

In a specific embodiment, the stainless steel fibers and/or the textile structure comprising the stainless steel fibers, is made into a prepreg, including partly or completely the matrix material required to make the fiber reinforced composite according to the invention.

In a specific embodiment of the invention, a fiber reinforced composite according to the invention is having an elongation at break in tensile mode of more than 7% in the direction of the steel fiber rovings. In a preferred embodiment, the fiber reinforced composite is having an elongation at break in tensile mode of more than 8% in the direction of the steel fiber rovings. In a further preferred embodiment, the elongation at break in tensile mode is more than 10% in the direction of the steel fiber rovings. The tensile testing is performed according to ASTM D3093-93. An example of a fiber reinforced composite according to the invention that showed an elongation at break in tensile mode higher than 10% in the direction of the steel fiber rovings, has been made with high density polyethylene (HDPE) as matrix material.

Another embodiment of the invention is where the fiber reinforced composite comprises reinforcement fibers in addition to the stainless steel fibers and where the matrix material of the fiber reinforced composite is comprising a polyolefin polymer. The additional reinforcement fibers can e.g. comprise polyolefin fibers or polyolefin tapes. The benefit of this embodiment is that the composite is having a high stiffness, thanks to the presence of the stainless steel fibers. A further benefit is easy recycling of the composite, the composite can e.g. be shredded without health issues, and the material can be reused to make a new composite with polyolefin matrix while the stainless steel fibers are providing reinforcement. A further benefit of this embodiment of the invention is that the fiber reinforced composite is having shielding properties, thanks to the presence of the stainless steel fibers. Composites according to this embodiment of the invention can be made according to any of the techniques known in the art, e.g. as described in EP 1650021 A1, EP1787790 A1, WO2004/028803 and in US2009/0017322A1. Composites according to the embodiment can be made e.g. by using different layers, some of the layers comprising stainless steel fibers and other layers containing the polyolefin fibers or polyolefin tapes. The polymer matrix according to this embodiment can be provided via incorporation in the layer(s) comprising the polyolefin fibers or polyolefin tapes, or be fully or partly supplied separately. This way, self reinforced polyolefin composites can be made with an additional reinforcement of annealed stainless steel fibers, giving the so-formed composite superiour stiffness values.

In a specific embodiment, the fiber based composite comprises a hybrid textile fabric. The hybrid textile fabric is comprising stainless steel fibers and polyolefin fibers or polyolefin tapes. In a more preferred embodiment, the hybrid textile fabric also comprises already partly or fully the matrix material.

In another specific embodiment, the polyolefin fibers or the polyolefin tapes are selected out of the group of a polyethylene, a polypropylene or a combination thereof, preferably a copolymer of ethylene and propylene, more preferably an ethylene-propylene block copolymer or a propylene-ethylene block copolymer.

In another specific embodiment, the polyolefin polymer of the polymer matrix is selected out of the group of a polyethylene, a polypropylene or a combination thereof, preferably a copolymer of ethylene and propylene, more preferably an ethylene-propylene block copolymer or a propylene-ethylene block copolymer.

In a further specific embodiment the polyolefin polymer of the matrix material has a DSC melting temperature that is lower than the DSC melting temperature of the polyolefin fibers or polyolefin tapes. The DSC meting temperature is defined in ISO 11357-3. This difference in melting temperature allows a heat treatment (e.g. to shape and consolidate the composite) above the melting temperature of the matrix that does not affect the mechanical properties of the reinforcements.

In an example of the invention, a machine part is provided, comprising a fiber reinforced composite according to the first aspect of the invention.

In an example of the invention, a crush cone is provided, comprising a fiber reinforced composite according to the first aspect of the invention.

In an example of the invention, a longitudinal beam is provided comprising a fiber reinforced composite according to the first aspect of the invention.

In an example of the invention, a door panel is provided comprising a fiber reinforced composite according to the first aspect of the invention.

A second aspect of the invention is a method to make a fiber reinforced composite according to the invention. The method is comprising a number of steps. One step is the provision of stainless steel fibers with a polygonal cross section, the stainless steel fibers have an annealed microstructure. Another step is providing a thermoset or a thermoplastic resin. Another step is combining the stainless steel fibers and the thermoset or thermoplastic resin. Another step is shaping the stainless steel fibers and thermoset or thermoplastic matrix and cure the so-shaped fiber reinforced composite. The curing can be a crosslinking operation using heat when a thermoset matrix is used (e.g. use of epoxy or polyester thermoset resins). The curing can be a solidifying operation when a thermoplastic matrix is used.

Combining the stainless steel fibers and the matrix can be according to any technique as known in the art. Examples of techniques for making a fiber reinforced composite according to the invention are injection molding (with the stainless steel fibers or textile product laid in the mould), compression molding, resin transfer molding, thermoforming, lay-up and spray-up techniques, filament winding and pultrusion.

According to a specific embodiment of the second aspect of the invention, the method further includes making a two-dimensional textile structure comprising the stainless steel fibers before combining the stainless steel fibers and the thermoset or thermoplastic resin.

### Brief Description of Figures in the Drawings

Figure 1 a shows a stainless steel fiber roving according to the invention.
Figure 1b shows a detail of the polygonal cross section of a stainless steel fiber according to the invention.
Figure 2 shows an example of a stainless steel fiber roving in which a yarn is wrapped around a stainless steel fiber roving.
Figure 3 shows an expanded view of an example of a fiber reinforced composite plate structure according to the invention.
Figure 4 shows an example of a fiber reinforced composite of a more complex shape according to the invention.
Figure 5 shows the transversal three point bending test set up.

### Mode(s) for Carrying Out the Invention

The invention is described providing a number of examples.

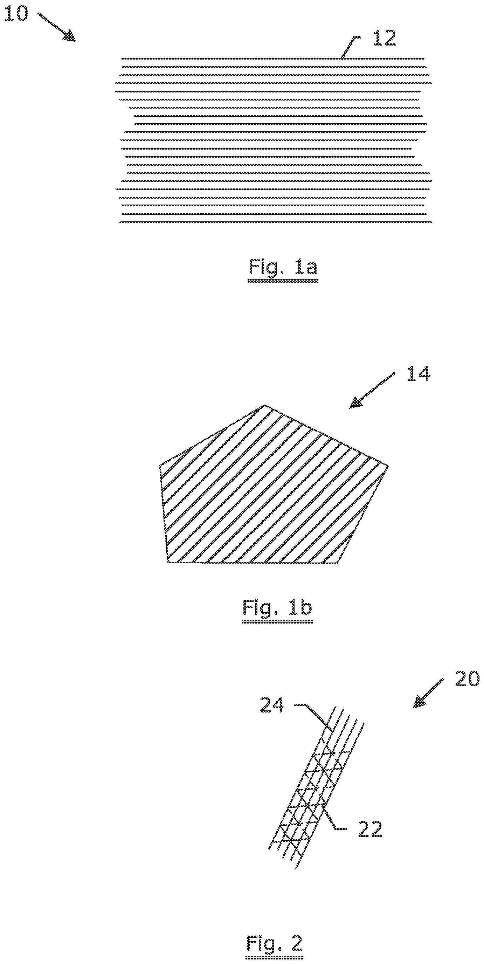

Figure 1 a shows a stainless steel fiber roving 10 as can be used in the invention. The stainless steel fiber roving comprises a series of individual continuous stainless steel fibers 12. The individual continuous stainless steel fibers 12 are substantially lying parallel one to the other in the stainless steel fiber roving. An example of such a stainless steel fiber roving comprises 275 continuous stainless steel fibers (=stainless steel fibers of an infinite length), each with an equivalent diameter of 40 µm and with an annealed microstructure and made out of AISI 316 steel grade. Preferably, stainless steel fiber rovings used for invention have between 90 and 1000 fibers in the cross section of the roving. Preferably, the equivalent fiber diamerer is between 10 and 100 µm, more preferably between 30 and 80 µm, even more preferably between 35 and 70 µm. Some example of stainless steel fiber rovings: 90 fibers of equivalent diameter 30 µm (roving of 511 tex); 275 fibers of equivalent diameter 12 µm (roving of 250 tex); 275 fibers of equivalent diameter 40 µm (roving of 2775 tex); 275 fibers of equivalent diameter 60 µm (roving of 6244 tex); 550 fibers of equivalent diameter 60 µm (roving of 12487 tex); 1000 fibers of equivalent diameter of 60 µm (22704 tex). E.g. all made out of AISI 316 steel grade.

Figure 1b shows an example of a polygonal cross section 14 of a stainless steel fiber as can be used according to the invention.

Figure 2 shows an example of a stainless steel fiber roving 20 in which a yarn is wrapped around the stainless steel fiber roving. Two filaments or yarns 22 and 24 are wrapped around a stainless steel fiber roving (375 filaments of 40 µm equivalent diameter each and with an annealed microstructure). An example of the yarns that are wrapped around the stainless steel fiber roving is a PVA (polyvinyl alcohol) yarn; e.g. a 110 dtex multifilament yarn (comprising 25 filaments). In an exemplary example, the yarns are wrapped with a twist of 350 turns per meter around the stainless steel roving, one yarn in S-direction and one yarn in Z-direction. In an alternative exemplary embodiment, the wrapping filament or yarn is a co-polyamide. The co-pypolyamide is having a low melting and/or a low softening point. Example of such a yarn is a 300 denier "Thermolux 85VLV2" from the company Luxilon Industries.

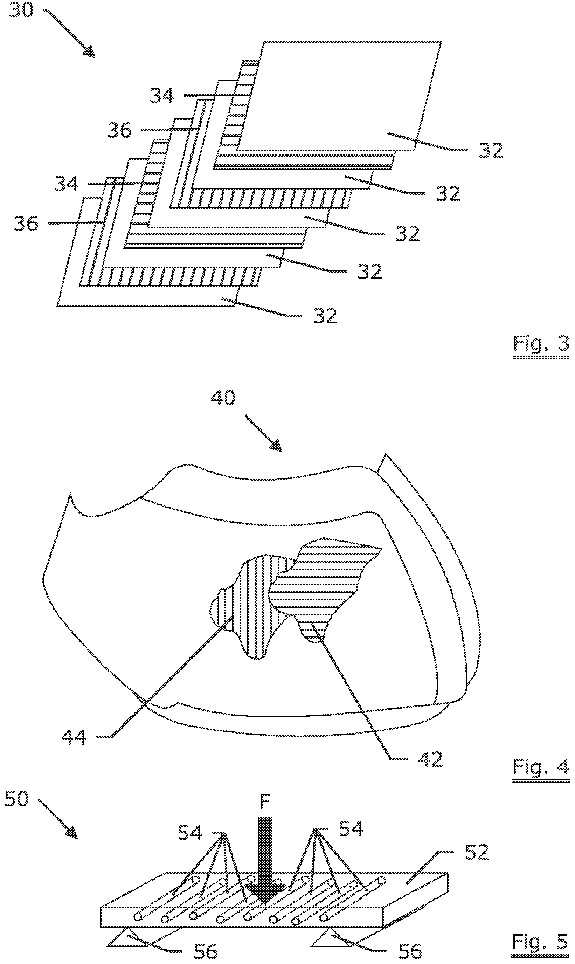

Figure 3 shows an expanded view of an example of a fiber reinforced composite plate structure according to the invention. The composite plate 30 is composed of layers. Matrix layers 32 are in between steel fiber roving reinforcement layers 34 and 36. In the example, the steel fiber roving reinforcement layers are unidirectional layers (UD-layers), with 11 rovings per cm. The steel fiber rovings are 275 filaments of 40 µm equivalent diameter each and with an annealed microstructure. The steel fiber roving layers 34 are oriented in one direction; whereas the steel fiber roving layers 36 are oriented under an angle of 90° of the direction of the steel fiber roving layers 34. In the example, a PP-PE (polypropylene-polyethylene) copolymer was used as matrix material, and specifically Rayofilm T produced by Amcor. The thickness of the composite was 2.2 mm.

An example of UD-layers that can be used are fabrics in which the steel fiber roving layers are laid substantially parallel to each other, and in which a scrim is bonded onto the steel fiber roving layer to provide cohesion of the so formed UD-fabric. The scrim can be made out of 275 dtex polyester multifilament yarn and be bonded by means of PVA (polyvinylalcohol) as bonding agent. The same bonding agent is used to bond the scrim onto the steel fiber roving layer to provide cohesion of the UD-fabric. In an example of the scrim, there are 200 polyester multifilament yarns of 275 dtex per 100 cm width of the scrim and diagonally (in the direction of +25° and -25°) the same yarns are positioned, with a distance in between the diagonal yarns of 5 mm.

Similar plates have been made using woven fabrics comprising the steel fiber rovings.

Figure 4 shows an example of a composite of a more complex shape. The object 40 is a cover with a double curved shape. Two layers of reinforcement 42 and 44 comprising each stainless steel fiber rovings in one direction are positioned under an angle of 90° of the direction of the steel fiber rovings. The steel fiber roving reinforcement layers are unidirectional layers (UD-layers), with 11 rovings per cm. The steel fiber rovings are 275 filaments of 40 µm equivalent diameter each and with an annealed microstructure. The reinforcements are inserted in a mould and polypropylene is added as matrix material and the composite material is made. The so-made cover has a thickness of 2.1 mm.

A lab scale crush cone was made according to the invention. Crush cones are e.g. used in the front of cars for energy absorption in case of car crashes. The lab scale crush cone sample was made winding two layers of a narrow woven fabric with the stainless steel fiber rovings (40 µm equivalent fiber diameter, annealed microsctrure, 375 filaments in the bundle, in the warp of the fabric, 11 warps per cm; and a polyester spun yarn of 20 tex in the weft, 4 picks per cm in order to form the fabric of 0.85 mm thickness) around a mandrel. The fiber reinforcement has been infused with cold-curing epoxy resin and curing has been applied. The crush cone had a length of 100 mm and a thickness of 2 mm. The lab scale crush cone has been tested in impact behaviour with satisfactorily results.

Figure 5 shows the transversal three point bending test set up 50. Fiber reinforced composite samples 52 have been made with dimensions length 80 mm, width 10 mm and thickness 1.90 mm. The fiber reinforced composite samples are made with annealed stainless steel fibers 54 aligned in width direction. The fiber reinforced composite sample 52 is supported in two points 56, the length of the fiber reinforced composite sample extends between the two supporting points 56. A force F is applied in the middle between the two supporting points 56. The bending test as shown in figure 5 is basically an adhesion test. Experimental results are shown in table 1. Each of the tested sample had a fiber volume fraction of 42%, fibers were annealed stainless steel bundle drawn fibers of 30 µm equivalent diameter provided in rovings with 275 annealed stainless steel fibers each. The matrix material of the fiber reinforced composite samples was polyamide 6, curing temperature is 260°C. The PVA (polyvinyl alcohol) yarn used for wrapping the stainless steel fiber roving was a 110 dtex multifilament yarn (comprising 25 filaments). The PVA yarn is wrapped with a twist of 350 turns per meter around the stainless steel roving, one yarn in S-direction and one yarn in Z-direction. The copolyamid fiber used is the 300 denier "Thermolux 85VLV2" from the company Luxilon Industries. The test results (table 1) showed satisfactorily results for all samples. The sample wherein the stainless steel fiber rovings had a PVA sizing and the sample wherein a PVA yarn was wrapped around the stainless steel fiber roving showed superior results in stiffness and maximum stress (strength) in the three point bending test, indicating that the adhesion is improved significantly compared to the case with no sizing or no wrapping yarn.

**Table 1: Test results of the three point transversal bending test**

| Surface of fibers and/or roving | Stiffness in the bending test (GPa) | Strength (maximum stress) in the bending test (MPa) |
|---|---|---|
| No sizing, no wrapping yarn | 1.8 | 22 |
| PVA (polyvinylalcohol) sizing on the stainless steel fibers | 3.8 | 59 |
| Copolyamid fiber wrapped around each stainless steel fiber roving | 2 | 31 |
| PVA yarn wrapped around each stainless steel roving | 4 | 70 |

## Claims

1. A fiber reinforced composite comprising a matrix material and stainless steel fibers, wherein said stainless steel fibers have a polygonal cross section and said stainless steel fibers have an annealed microstructure.

2. The fiber reinforced composite as in claim 1, wherein said stainless steel fibers are stainless steel fibers of infinite length.

3. The fiber reinforced composite as in claims 1 or 2, wherein said stainless steel fibers are provided as stainless steel fiber rovings.

4. The fiber reinforced composite as in claim 1, wherein said stainless steel fibers are provided as stainless steel fibers of discrete length; said stainless steel fibers of discrete length have an average fiber length of at least 60 mm.

5. The fiber reinforced composite as in claims 1 - 4, wherein said matrix material is a thermoplastic polymer or a thermoset resin.

6. The fiber reinforced composite as in claims 1 - 5, wherein said stainless steel fibers are arranged in bundles; said bundle of stainless steel fibers is comprising a fiber or yarn wrapped around said bundle of stainless steel fibers.

7. The fiber reinforced composite as in claims 1 - 6, in which said stainless steel fibers are provided in a two-dimensional textile structure.

8. The fiber reinforced composite as in claims 1 - 7, in which the fiber reinforced composite has an elongation at break in tensile mode of more than 7% when tested in a direction of the stainless steel fibers.

9. The fiber reinforced composite as in claims 1 - 8, wherein the fiber reinforced composite comprises additional reinforcement fibers in addition to the stainless steel fibers, said additional reinforcement fibers comprise polyolefin fibers or polyolefin tapes; and wherein said matrix material is comprising a polyolefin polymer.

10. The fiber reinforced composite as in claim 9, wherein the fiber reinforced composite comprises a hybrid textile fabric, said hybrid textile fabric comprises stainless said steel fibers and said hybrid textile fabric comprises said polyolefin fibers or said polyolefin tapes.

11. The fiber reinforced composite as in claims 9 - 10 , wherein said polyolefin fibers or said polyolefin tapes are selected out of the group of a polyethylene, a polypropylene or a combination thereof, preferably a copolymer of ethylene and propylene, more preferably an ethylene-propylene block copolymer or a propylene-ethylene block copolymer.

12. The fiber reinforced composite as in claims 9 - 11, wherein said polyolefin polymer of said polymer matrix is selected out of the group of a polyethylene, a polypropylene or a combination thereof, preferably a copolymer of ethylene and propylene, more preferably an ethylene-propylene block copolymer or a propylene-ethylene block copolymer.

13. The fiber reinforced composite as in claims 10 - 12 , wherein said polyolefin polymer of said matrix material has a DSC melting temperature that is lower than the DSC melting temperature of said polyolefin fibers or of said polyolefin tapes.

14. Method for making a fiber reinforced composite, comprising the steps of providing stainless steel fiber fibers, said stainless steel fibers are having a polygonal cross section; said stainless steel fibers are having an annealed microstructure; and said method is comprising the further steps of providing a thermoset or a thermoplastic resin; combining said stainless steel fibers and said thermoset or thermoplastic resin; shaping said stainless steel fibers and said thermoset or thermoplastic resin; and curing the so-shaped fiber reinforced composite.

15. Method for making a fiber reinforced composite as in claim 14, comprising the further steps of making a two-dimensional textile structure with said stainless steel fibers; and combining said two-dimensional fabric structure and said thermoset or thermoplastic resin.

## Patentansprüche

1. Faserverstärkter Verbundwerkstoff, umfassend ein Matrixmaterial und Edelstahlfasern, wobei die Edelstahlfasern einen polygonalen Querschnitt aufweisen und die Edelstahlfasern eine geglühte Mikrostruktur aufweisen.

2. Faserverstärkter Verbundwerkstoff nach Anspruch 1, wobei die Edelstahlfasern Edelstahlfasern unendlicher Länge sind.

3. Faserverstärkter Verbundwerkstoff nach Anspruch 1 oder 2, wobei die Edelstahlfasern als Edelstahlfaserrovings bereitgestellt werden.

4. Faserverstärkter Verbundwerkstoff nach Anspruch 1, wobei die Edelstahlfasern als Edelstahlfasern mit diskreter Länge bereitgestellt sind; wobei die Edelstahlfasern der diskreten Länge eine durchschnittliche Faserlänge von mindestens 60 mm aufweisen.

5. Faserverstärkter Verbundwerkstoff nach einem der Ansprüche 1 bis 4, wobei das Matrixmaterial ein thermoplastisches Polymer oder ein duroplastisches Harz ist.

6. Faserverstärkter Verbundwerkstoff nach einem der Ansprüche 1 bis 5, wobei die Edelstahlfasern in Bündeln angeordnet sind; wobei das Bündel aus Edelstahlfasern eine Faser oder ein Garn umfasst, das um das Bündel aus Edelstahlfasern gewickelt ist.

7. Faserverstärkter Verbundwerkstoff nach einem der Ansprüche 1 bis 6, wobei die Edelstahlfasern in einer zweidimensionalen Gewebestruktur bereitgestellt sind.

8. Faserverstärkter Verbundwerkstoff nach einem der Ansprüche 1 bis 7, wobei der faserverstärkte Verbundwerkstoff eine Bruchdehnung im Zugmodus von mehr als 7% aufweist, wie in einer Richtung der Edelstahlfasern getestet.

9. Faserverstärkter Verbundwerkstoff nach einem der Ansprüche 1 bis 8, wobei der faserverstärkte Verbundstoff zusätzlich zu den Edelstahlfasern zusätzliche Verstärkungsfasern aufweist, wobei die zusätzlichen Verstärkungsfasern Polyolefinfasern oder Polyolefinbänder umfassen; und wobei das Matrixmaterial ein Polyolefinpolymer umfasst.

10. Faserverstärkter Verbundwerkstoff nach Anspruch 9, wobei der faserverstärkte Verbundwerkstoff ein Hybrid-Textilgewebe umfasst, wobei das Hybrid-Textilgewebe aus Edelstahl besteht und das Hybrid-Textilgewebe die Polyolefinfasern oder die Polyolefinbänder umfasst.

11. Faserverstärkter Verbundwerkstoff nach einem der Ansprüche 9 bis 10, wobei die Polyolefinfasern oder die Polyolefinbänder ausgewählt sind aus der Gruppe eines Polyethylens, eines Polypropylens oder einer Kombination davon, vorzugsweise eines Copolymers aus Ethylen und Propylen, bevorzugter eines Ethylenpropylens, mehr bevorzugt eines Ethylen-Propylen-Blockcopolymers oder eines Propylen-Ethylen-Blockcopolymers.

12. Faserverstärkter Verbundwerkstoff nach einem der Ansprüche 9 bis 11, wobei das Polyolefinpolymer oder der Polymermatrix ausgewählt ist aus der Gruppe eines Polyethylens, eines Polypropylens oder einer Kombination davon, vorzugsweise eines Copolymers aus Ethylen und Propylen, bevorzugter eines Ethylenpropylens, mehr bevorzugt eines Ethylen-Propylen-Blockcopolymers oder eines Propylen-Ethylen-Blockcopolymers.

13. Faserverstärkter Verbundwerkstoff nach einem der Ansprüche 10 bis 12, wobei das Polyolefinpolymer des Matrixmaterials eine DSC-Schmelztemperatur aufweist, die niedriger als die DSC-Schmelztemperatur der Polyolefinfasern oder der Polyolefinbänder ist.

14. Verfahren zur Herstellung eines faserverstärkten Verbundwerkstoffs, umfassend die Schritte: Bereitstellen von Edelstahlfasern, wobei die Edelstahlfasern einen polygonalen Querschnitt aufweisen; wobei die Edelstahlfasern eine geglühte Mikrostruktur aufweisen; und wobei das Verfahren die folgenden weiteren Schritte umfasst: Bereitstellen eines duroplastischen oder thermoplastischen Harzes; Kombinieren der Edelstahlfasern und des duroplastischen oder thermoplastischen Harzes; Formen der Edelstahlfasern und des duroplastischen oder thermoplastischen Harzes; und Aushärten des so geformten faserverstärkten Verbundwerkstoffs.

15. Verfahren zur Herstellung eines faserverstärkten Verbundwerkstoffs nach Anspruch 14, umfassend die weiteren Schritte des Herstellens einer zweidimensionalen Textilstruktur mit den Edelstahlfasern; und Kombinieren der zweidimensionalen Gewebestruktur und des duroplastischen oder thermoplastischen Harzes.

## Revendications

1. Composite renforcé par des fibres comprenant un matériau de matrice et des fibres d'acier inoxydable, dans lequel lesdites fibres d'acier inoxydable ont une section transversale polygonale et lesdites fibres d'acier inoxydable ont une microstructure recuite.

2. Composite renforcé par des fibres selon la revendication 1, dans lequel lesdites fibres d'acier inoxydable sont des fibres d'acier inoxydable de longueur infinie.

3. Composite renforcé par des fibres selon les revendications 1 ou 2, dans lequel lesdites fibres d'acier inoxydable sont présentes sous forme de stratifils de fibres d'acier inoxydable.

4. Composite renforcé par des fibres selon la revendication 1, dans lequel lesdites fibres d'acier inoxydable sont présentes sous forme de fibres d'acier inoxydable de longueur individuelle ; lesdites fibres d'acier inoxydable de longueur individuelle ayant une longueur de fibre moyenne d'au moins 60 mm.

5. Composite renforcé par des fibres selon les revendications 1 à 4, dans lequel ledit matériau de matrice est un polymère thermoplastique ou une résine thermodurcissable.

6. Composite renforcé par des fibres selon les revendications 1 à 5, dans lequel lesdites fibres d'acier inoxydable sont disposées en faisceaux ; ledit faisceau de fibres d'acier inoxydable comprenant une fibre ou un fil enroulé(e) autour dudit faisceau de fibres d'acier inoxydable.

7. Composite renforcé par des fibres selon les revendications 1 à 6, dans lequel lesdites fibres d'acier inoxydable sont présentes dans une structure textile bidimensionnelle.

8. Composite renforcé par des fibres selon les revendications 1 à 7, le composite renforcé par des fibres ayant un allongement à la rupture dans le mode traction qui est supérieur à 7 % quand il est évalué dans une direction des fibres d'acier inoxydable.

9. Composite renforcé par des fibres selon les revendications 1 à 8, le composite renforcé par des fibres comprenant des fibres de renforcement additionnelles en plus des fibres d'acier inoxydable, lesdites fibres de renforcement additionnelles comprenant des fibres de polyoléfine ou des rubans de polyoléfine ; et ledit matériau de matrice comprenant un polymère de polyoléfine.

10. Composite renforcé par des fibres selon la revendication 9, le composite renforcé par des fibres comprenant un tissu textile hybride, ledit tissu textile hybride comprenant lesdites fibres d'acier inoxydable et ledit tissu textile hybride comprenant lesdites fibres de polyoléfine ou lesdits rubans de polyoléfine.

11. Composite renforcé par des fibres selon les revendications 9 à 10, dans lequel lesdites fibres de polyoléfine ou lesdits rubans de polyoléfine sont sélectionné(e)s en dehors du groupe constitué d'un polyéthylène, d'un polypropylène ou d'une combinaison de ceux-ci, préférablement d'un copolymère d'éthylène et de propylène, plus préférablement d'un copolymère à blocs d'éthylène-propylène ou d'un copolymère à blocs de propylène-éthylène.

12. Composite renforcé par des fibres selon les revendications 9 à 11, dans lequel ledit polymère de polyoléfine de ladite matrice polymère est sélectionné en dehors du groupe constitué d'un polyéthylène, d'un polypropylène ou d'une combinaison de ceux-ci, préférablement d'un copolymère d'éthylène et de propylène, plus préférablement d'un copolymère à blocs d'éthylène-propylène ou d'un copolymère à blocs de propylène-éthylène.

13. Composite renforcé par des fibres selon les revendications 10 à 12, dans lequel ledit polymère de polyoléfine dudit matériau de matrice a une température de fusion déterminée par calorimétrie différentielle à balayage qui est inférieure à la température de fusion déterminée par calorimétrie différentielle à balayage desdites fibres de polyoléfine ou desdits rubans de polyoléfine.

14. Procédé de fabrication d'un composite renforcé par des fibres, comprenant les étapes qui consistent à fournir des fibres d'acier inoxydable, lesdites fibres d'acier inoxydable ayant une section transversale polygonale ; lesdites fibres d'acier inoxydable ayant une microstructure recuite ; et ledit procédé comprenant les étapes supplémentaires de fourniture d'une résine thermodurcissable ou thermoplastique ; la combinaison desdites fibres d'acier inoxydable et de ladite résine thermodurcissable ou thermoplastique ; la formation desdites fibres d'acier inoxydable et de ladite résine thermodurcissable ou thermoplastique ; et le durcissement du composite renforcé par des fibres ainsi formé.

15. Procédé de fabrication d'un composite renforcé par des fibres selon la revendication 14, comprenant les étapes supplémentaires de fabrication d'une structure textile bidimensionnelle avec lesdites fibres d'acier inoxydable ; et la combinaison de ladite structure de tissu bidimensionnelle et de ladite résine thermodurcissable ou thermoplastique.
